# EUROPEAN PATENT SPECIFICATION

(11) **EP 2 962 837 B1**
(45) Date of publication and mention of the grant of the patent: **12.12.2018**
(21) Application number: 15169795.0
(22) Date of filing: 29.05.2015
(51) Int. Cl.: B29C 70/68

(54) **METHOD AND APPARATUS FOR APPLYING PLASTIC SHEETS TO THE SIDE WALLS OF A CAST CONCRETE FOUNDATION MOLD ELEMENT**
VERFAHREN UND VORRICHTUNG ZUR ANBRINGUNG VON KUNSTSTOFFPLATTEN AN DEN WÄNDEN EINES FUNDAMENTFORMELEMENTS
PROCÉDÉ ET APPAREIL POUR APPLIQUER DES FEUILLES EN PLASTIQUE SUR LES MURS D'UN ÉLÉMENT DE MOULAGE DE FONDATION

(30) Priority: 12.06.2014 FI 20145545
(43) Date of publication of application: 06.01.2016
(73) Proprietor: Beotek Oy, 05800 Hyvinkää (FI)
(72) Inventor: Jokinen, Reijo, 05800 Hyvinkää (FI)
(74) Representative: LEITZINGER OY

(56) References cited:
- EP-A2- 1 837 164
- US-A- 3 932 249
- US-A- 4 402 785

## Description

The invention relates to a method for applying plastic sheets to the side walls of a cast concrete foundation mold element, the mold element comprising a coarse reinforcement mesh fabricated from steel bars and having its steel bars fixed to each other at cross-over points thereof, and being designed as an elongated gutter, said method comprising providing the side walls of the reinforcement mesh on opposite sides thereof with plastic sheets between which is formed a vacuum by suction and which are brought by hot air heating to a face-to-face engagement in the area of reinforcement mesh openings.

The invention relates also to an apparatus for applying plastic sheets to the side walls of a cast concrete foundation mold element, the mold element comprising a coarse reinforcement mesh fabricated from steel bars and having its steel bars fixed to each other at cross-over points thereof, the reinforcement mesh constituting an elongated gutter which includes a bottom and side walls and which functions as a mold frame.

A foundation mold element of this type, having its walls laminated with plastic sheets by hot air blasting, has been disclosed in publication DE-U1-29700133 from the year 1997 and those have been fabricated by Suomen Muottitekniikka Oy under trademark formex®.

Moreover, the fabrication of casting boards under trademark formex® has become known through use since the year 2000. This prior known technique involves the use of an inclined mesh table (lamination table) on which is first unfolded a plastic sheet ending up on a first side of the casting board. Thereupon is laid a core mesh for the casting board, on top of which is folded a plastic sheet to be placed on a second side of the casting board. The plastic sheet hems have settled on either side of a suction pipe present at a lower edge of the lamination table. Through a suction slot of the suction tube has been imposed a vacuum between the plastic sheets. While the vacuum is in effect, heat blasting has been applied from opposite sides of the casting boards to the plastic sheets to be laminated. The heat nozzle device has been movable along rails present at upper and lower edges of the lamination table.

The publication US-3932249 discloses a method of applying sheets on either side of a metal grid by making use of vacuum suction between the sheets for bringing the sheets against each other in the area of mesh openings.

A method and apparatus of the foregoing type is known from patent publication EP 1837164. In this prior known apparatus, a vacuum is imposed between plastic sheets with a suction slot present in the area of a bottom edge of the wall. A problem is how to enable bottom hems of the plastic sheets to provide sufficient sealing on both sides of the suction slot so as to enable the suction effect across the entire suction slot to be conducted into a space between the plastic sheets. Therefore, it has been necessary in this prior known solution to place (raise) the suction slot alongside a bottom edge of the straight wall portion and there is further provided a special sealing adjacent to the suction slot. The suction slot, along with its sealing, precludes a face-to-face lamination of the plastic sheets to such a distance downward that would be sufficient for enabling the laminated plastic wall to prevent concrete casting from penetrating across under the wall's bottom edge out of the mold. Elimination of this has been attempted by designing the plastic sheet hem intended for an outer side of the suction slot in such a length that this loosely hanging hem can be folded under a bottom bend of the mold element as the mold element is set in its position for making a foundation. Another drawback with a single continuous suction slot is the requirement of a high suction power and a high performance suction device.

An object of the invention is to provide an improved method and apparatus, which are capable of eliminating or at least substantially alleviating the foregoing problems or drawbacks.

This object is attained with a method of the invention on the basis of characterizing features presented in the appended claim 1. The object is also attained with the system presented in claim 3. The dependent claims disclose preferred embodiments of the invention.

The invention will now be described in more detail by way of an exemplary embodiment with reference to the accompanying drawings, in which
- Fig. 1: shows an apparatus of the invention schematically in an end view;
- Figs. 2: and 3 show the same apparatus schematically in plan and side views, respectively;
- Fig. 4: shows a detail in an apparatus of the invention in a cross-section view; and
- Fig. 5: shows the position of a suction tube in an apparatus of the invention at an early stage of lamination.

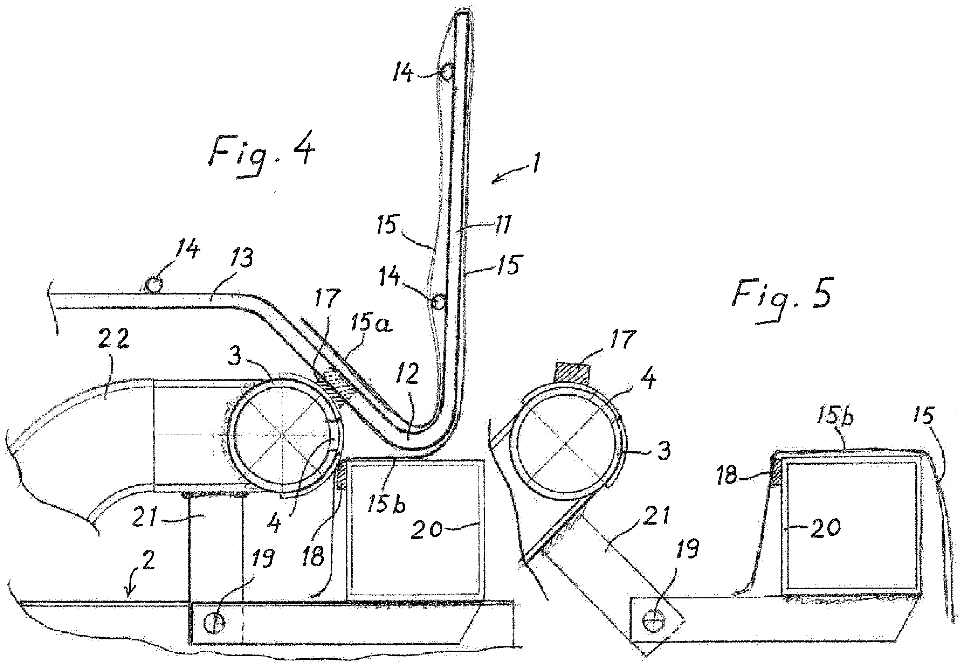

Reference is first made to figs. 4 and 5. A mold element 1 includes a coarse reinforcement mesh fabricated from steel bars 11-14, said steel bars 11-14 being fixed to each other at cross-over points thereof. The reinforcement mesh constitutes an elongated gutter which includes a bottom and side walls and which functions as a mold frame. The bottom consists of crosswise steel bars 13 and lengthwise steel bars 14. The side walls consist of vertical steel bars 11 and lengthwise or horizontal steel bars 14. Between the bottom and the side walls are present U- or V-shaped bottom bends which make up the mold element's legs 12 present between the vertical wall bars 11 and the crosswise horizontal bottom bars 14. In use, a ready-to-operate mold element is set in its position upon the legs 12. Thus, the bottom remains in an elevated position and the steel bars 13, 14 are left within concrete casting. Plastic sheets 15 to be laminated on the walls provide tight walls for concrete casting.

The plastic sheet intended for each side wall is typically made up of a single sheet web. In the vicinity of the upper wall edge, the plastic sheet is double-folded for providing opposite sides of the wall with plastic sheets 15. These plastic sheets are brought to a face-to-face engagement by hot air heating in the area of reinforcement mesh openings.

Square beams 20 are mounted to a lamination table 2, to each of its lateral edges. Next to each square beam 20 lies a suction pipe 3 which is connected by a link 21 to a hinge axle 19 around which the suction pipe 3 is rotatable between the positions shown in figs. 4 and 5. The suction pipe 3 is provided with circular suction orifices 4 spaced from each other by a distance equal to that between crosswise steel bars 13, 11 of the mold frame. This distance is typically about 20 cm. Diameter of the suction orifices is typically within the range of 1-2 cm. The suction pipe is mounted on the suction side of a fan with a suction hose 22 which may connect to an end or mid-section of the suction pipe 3.

As visible from figs. 4 and 5, an edge 15b of the plastic sheet to be laminated is pulled on top and over the square pipe 20 of the lamination table. On top of the square pipe 20, the hem lies in a horizontal plane. This is followed by rotating the suction pipe 3 with its suction orifices 4 around the axle 19 to rest on the square pipe 20. The plastic sheet's hem 15b is left between the suction pipe 3 and the square pipe 20. The square pipe 20 has a sealing 18 under the plastic sheet at a location against which the suction pipe 3 is resting. The suction pipe 3 has another sealing 17 above the suction orifices.

The mold frame is set on a lamination table so as to place the legs 12 on top of the square pipe 20 and the hem 15b and to place bottom-side steel bars of the legs 12, which connect the crosswise steel bars 13 and 11, in alignment with the suction orifices 4. The legs 12 have their bottom-side flanks resting against the sealings 17 of the suction pipes 3. The suction orifices 4 are located under the bottom-side flanks of the legs 12. The plastic sheet is folded over a top edge of the wall and a hem 15a is placed on an internal side of the leg in a diagonally upward rising position. The hem 15a is to extend beyond the sealing 17. Aside from locations of the suction orifices 4, the space between the plastic sheet hems 15a and 15b is completely filled up and closed. Suction only takes place locally at locations of the suction orifices 4, which, in a longitudinal direction of the mold frame, are thus only in alignment with the crosswise steel bars 13, 11. The crosswise and lengthwise steel bars prevent the vacuum from pulling the plastic sheet to attachment with each other in the immediate proximity of the steel bars and thereby the latter make up a channel system by which the suction effect is distributed all over the walls by way of crosswise channels defined by the steel bars of the legs 12. If the suction orifices 4 were, in a longitudinal direction of the mold frame, located within areas between the crosswise steel bars 13, 11, the suction orifices would become immediately obstructed by the hem 15a of the upper plastic sheet and no suction would be possible.

The plastic sheet's lower hem 15b which is present under the leg 12 of the mold frame is made long enough to prevent the mold legs from sinking into the ground at construction site, as also disclosed in publication DE 29700133 U1. The plastic sheet's upper hem 15a is made so short that it only extends to the sealing until, in the process of lamination heating and upon cooling, the plastic sheet shrinks and contracts onto the bottom of the leg 12, thereby not precluding the adherence of concrete to the bottom-side steel bar of the leg 12 but allowing concrete to pass all the way to the ground also where the leg 12 is located. Hence, lamination of the hems against each other is possible all the way down to the bottom edge of the wall. This is not possible with the solution of patent EP 1837164, in which the suction slot precludes lamination of the plastic sheets against each other in the bottom edge area of the wall.

Hence, in the apparatus according to the invention, the suction holes 4 are arranged at a spacing which is equal to the spacing of the crosswise steel bars 13, 11, whereby the suction holes 4 enable applying the suction to a channel system defined by the reinforcement mesh 11, 14. By way of this channel system the suction effect can be distributed all over the mold element's wall with a lower suction power and with a suction device whose performance is lower than before. A particular benefit is gained by the ability to laminate plastic sheets against each other down to a sufficiently low level for preventing concrete casting from being squeezed out of the mold by way of under the bottom edge. As opposed to the results of a prior known suction slot, the suction orifices arranged according to the invention enable the suction effect to be focused and distributed locally in a suction channel system defined by the reinforcement mesh 11, 14.

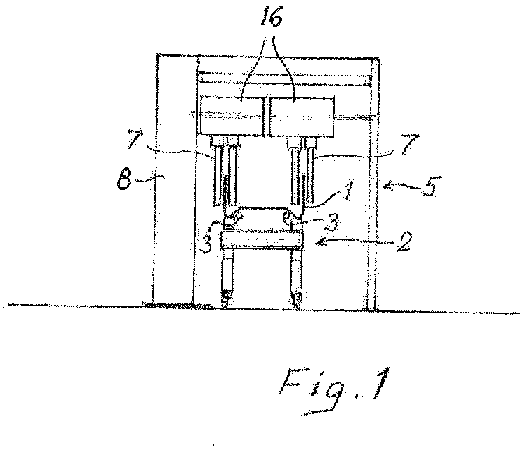

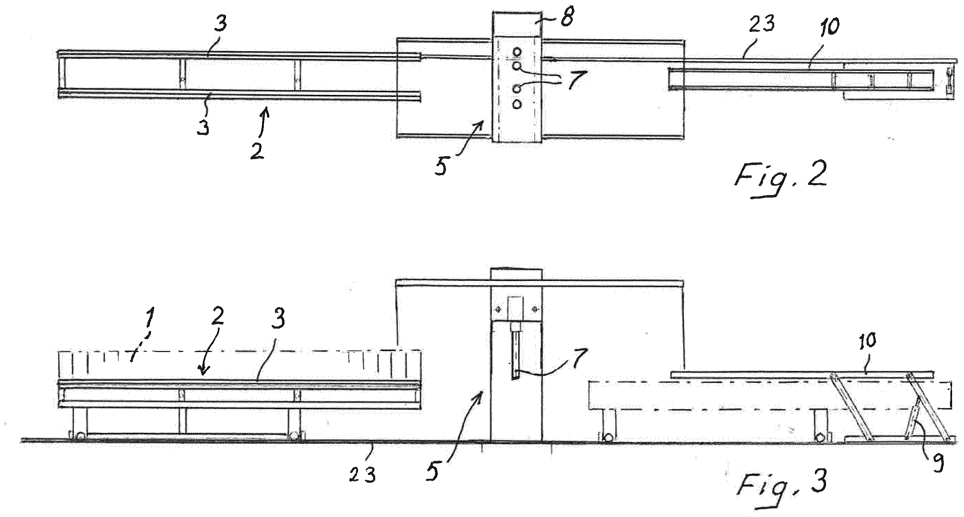

Figs. 1-3 show a general view of an apparatus, wherein suction pipes 3 are mounted on a lamination table 2 by means of which a mold element 1 is movable by way of a hot air blasting unit 5 to an unloading position in which a ready-to-use mold element is lifted from the lamination table 2 by means of an unloading table 10 hoisted by a cylinder 9. At this point, the lamination table 2 can return to its starting position shown in figs. 2 and 3, in which plastic sheets can be drawn from rolls 16 to overlie each side wall. Alternatively, the lamination table 2 can be dismantled and loaded on both sides of the hot air blasting unit 5 and the lamination can be performed while the lamination table is moving in each direction. A driving roller associated with a leg of the lamination table may engage e.g. with a rail 23, which at the same time provides a way of steering the lamination table through the hot air blasting unit 5.

In the hot air blasting unit 5, the side walls of a mold element 1 are passing through between hot air blasting nozzles 7. Hot air blasting takes place while the mold element is passing through the hot air blasting unit. The hot air blasting unit 5 is partially closed with curtains for reducing heat losses. This enables the application of sufficient heat to plastic sheets even when the hot air blasting nozzles have been set at such a large distance from the walls of a mold element 1 that no guide rolls are needed for steering the walls into a space between the hot air blasting nozzles. In addition, the lamination table design provides precise positioning for the mold frame. Reference numeral 8 is used to denote an equipment cabinet.

The invention offers a number of benefits:
- ability to focus the suction on a correct spot, thus reducing the need of intake air and eliminating the sealing problems of plastic sheet hems with regard to a suction slot
- ability to laminate plastic sheets down to a sufficient proximity of the bottom edges of side walls for preventing concrete casting from being squeezed across under the bottom edges
- ability to equalize the suction pressure in a longitudinal direction of the suction pipe with a changing orifice size or a changing orifice density, for example by not making every other orifice in the area where the suction hose 21 connects to the suction pipe 3.

## Claims

1. A method for applying plastic sheets to the side walls of a cast concrete foundation mold element (1), the mold element comprising a coarse reinforcement mesh fabricated from steel bars (11-14) and having its steel bars (11-14) fixed to each other at cross-over points thereof, and being designed as an elongated gutter, said steel bars comprising crosswise steel bars (11,13), said method comprising providing the side walls of the reinforcement mesh (11-14) on opposite sides thereof with plastic sheets (15) between which is formed a vacuum by suction and which are brought by hot air heating to a face-to-face engagement in the area of reinforcement mesh openings, **characterized in that** the vacuum is being sucked between the plastic sheets (15) with suction orifices (4), which are associated with suction pipes (3) and which are arranged at a spacing which is equal to the spacing between the mold element's crosswise steel bars (13, 11), the suction orifices (4) being used for applying suction to a channel system defined by the reinforcement mesh (11-14) for distributing the suction effect all over the mold element's side walls by way of said channel system.

2. A method according to claim 1, **characterized in that** first hems (15b) of the plastic sheets (15) are being placed horizontally on a lamination table, legs (12) of the mold frame are being placed on top of the first hems (15b), second hems (15a) of the plastic sheets are being placed inside the legs to extend diagonally upward towards a bottom of the mold frame, and a space between the hems (15a, 15b) is being fully sealed with the exception of where the suction orifices (4) are located.

3. A system comprising a cast concrete foundation mold element (1), the mold element comprising a coarse reinforcement mesh fabricated from steel bars (11-14) and having its steel bars (11-14) fixed to each other at cross-over points thereof, said steel bars comprising crosswise steel bars (11,13), the reinforcement mesh constituting an elongated gutter which includes a bottom and side walls and which forms a mold frame, and an apparatus for applying plastic sheets to the side walls of said cast concrete foundation mould element (1), **characterized in that** the apparatus comprises suction pipes (3), which are provided with suction orifices (4) and when the mold frame is set on the apparatus for applying the plastic sheets, the suction orifices (4) are in alignment with the mold frame's crosswise steel bars (13, 11) and the spacing of the suction orifices is equal to the spacing of the mold frame's crosswise steel bars (13, 11), whereby, when the apparatus is operating, the suction effect is distributed locally in a suction channel system defined by the reinforcement mesh (11-14).

4. An apparatus according to claim 3, **characterized in that** the suction pipe (3) and the suction orifices (4) are located under a bottom-side flank of the mold frame's legs (12) when the mold frame has been placed in the apparatus for the application of plastic sheets (15).

5. An apparatus according to claim 3 or 4, **characterized in that** the apparatus comprises a lamination table (2), whereupon the mold element (1) is carried through a hot air blasting unit (5), and that the suction pipes (3) are mounted on the lamination table (2) by means of links (21) rotatable around an axle (19).

## Patentansprüche

1. Verfahren zum Auftragen von Plastikfolien auf die Seitenwände eines Gussbetonfundament-Formelementes (1), wobei das Formelement ein grobes Armierungsgitter umfasst, das aus Stahlstäben (11-14) hergestellt ist und bei dem seine Stahlstäbe (11-14) aneinander an Kreuzungspunkten derselben befestigt sind und wobei es als längliche Rinne konstruiert ist, wobei die Stahlstäbe gekreuzte Stahlstäbe (11, 13) umfassen, wobei das Verfahren das Bereitstellen der Seitenwände des Armierungsgitters (11-14) auf entgegengesetzten Seiten desselben mit Plastikfolien (15) umfasst, zwischen denen ein Vakuum durch Saugen gebildet wird und die durch Warmlufterwärmung in einen direkten Kontakt im Bereich von Armierungsgitteröffnungen gebracht werden, **dadurch gekennzeichnet, dass** das Vakuum zwischen den Plastikfolien (15) mit Saugöffnungen (4) abgesaugt wird, die mit Saugrohren (3) verbunden sind und die mit einem Abstand angeordnet sind, der gleich dem Abstand zwischen den kreuzweise angeordneten Stahlstäben (13, 11) des Formelementes ist, wobei die Saugöffnungen (4) zum Anwenden des Saugens auf ein Kanalsystem verwendet werden, das durch das Armierungsgitter (11-14) zum Verteilen des Saugeffektes über alle Seitenwände des Formelementes mittels des Kanalsystems eingesetzt wird.

2. Verfahren nach Anspruch 1, **dadurch gekennzeichnet, dass** erste Säume (15b) der Plastikfolien (15) horizontal auf einen Laminierungstisch gelegt werden, wobei die Beine (12) des Formrahmens oben auf die ersten Säume (15b) gelegt werden, wobei zweite Säume (15a) der Plastikfolien innerhalb der Beine platziert werden, damit sie sich diagonal nach oben zu einem Boden des Formrahmens erstrecken, und wobei ein Abstand zwischen den Säumen (15a, 15b) vollständig abgedichtet ist, außer dort, wo sich die Saugöffnungen (4) befinden.

3. System, umfassend
ein Gussbetonfundament-Formelement (1), wobei das Formelement ein grobes Armierungsgitter umfasst, das aus Stahlstäben (11-14) hergestellt ist und wobei seine Stahlstäbe (11-14) aneinander an Kreuzungspunkten derselben befestigt sind, wobei die Stahlstäbe gekreuzte Stahlstäbe (11, 13) umfassen, wobei das Armierungsgitter eine längliche Rinne darstellt, die einen Boden und Seitenwände hat und die einen Formrahmen bildet und eine Vorrichtung zum Auftragen von Plastikfolien auf die Seitenwände des Gussbetonfundament-Formelementes (1),
**dadurch gekennzeichnet, dass** die Vorrichtung Saugrohre (3) umfasst, die mit Saugöffnungen (4) versehen sind, und wenn der Formrahmen auf die Vorrichtung zum Auftragen der Plastikfolien gesetzt wird, sind die Saugöffnungen (4) in Flucht mit den gekreuzten Stahlstäben (13, 11) des Formrahmens, und der Abstand der Saugöffnungen ist gleich dem Abstand der gekreuzten Stahlstäbe (13, 11) des Formrahmens, wodurch bei Betrieb der Vorrichtung der Saugeffekt lokal in einem Saugkanalsystem verteilt wird, das durch das Armierungsgitter (1-14) definiert wird.

4. Vorrichtung nach Anspruch 3, **dadurch gekennzeichnet, dass** das Saugrohr (3) und die Saugöffnungen (4) sich unter einer Boden-Seitenflanke der Beine (12) des Formrahmens befinden, wenn der Formrahmen in die Vorrichtung für das Auftragen der Plastikfolien (15) gebracht worden ist.

5. Vorrichtung nach Anspruch 3 oder 4, **dadurch gekennzeichnet, dass** die Vorrichtung einen Laminierungstisch (2) umfasst, worauf das Formelement (1) durch eine Heißluftstrahlanlage (5) transportiert wird, und dass die Sargrohre (3) auf dem Laminierungstisch (2) mittels Verbindungsgliedern (21) befestigt sind, die rund um eine Achse (19) drehbar sind.

## Revendications

1. Procédé pour l'application de feuilles plastiques sur les parois latérales d'un élément de moule de fondation en béton coulé (1), l'élément de moule comprenant un maillage de renforcement grossier constitué de barres d'acier (11-14) et dont les barres d'acier (11-14) sont fixées les unes aux autres en des points de croisement de celles-ci, tout en étant conçu comme une gouttière allongée, lesdites barres d'acier comprenant des barres d'acier transversales (11, 13), ledit procédé comprenant la disposition des parois latérales du maillage de renforcement (11-14) sur des côtés opposés de celui-ci avec des feuilles plastiques (15) entre lesquelles est formé un vide par aspiration et lesquelles sont mises en engagement face-à-face dans la zones des ouvertures du maillage de renforcement par chauffage à l'air chaud, **caractérisé en ce que** le vide est aspiré entre les feuilles plastiques (15) avec des orifices d'aspiration (4) associés à des tuyaux d'aspiration (3) et disposés selon un espacement égal à l'espacement entre les barres d'acier transversales (13, 11) de l'élément de moule, les orifices d'aspiration (4) étant utilisés pour appliquer une aspiration à un système de canaux défini par le maillage de renforcement (11-14) pour répartir l'effet d'aspiration sur l'ensemble des parois latérales de l'élément de moule par le biais dudit système de canaux.

2. Procédé selon la revendication 1, **caractérisé en ce que** des premiers rebords (15b) des feuilles plastiques (15) sont placés horizontalement sur une table de lamination, des jambes (12) du cadre de moule étant placées par-dessus les premiers rebords (15b), des deuxièmes rebords (15a) des feuilles plastiques étant placés à l'intérieur des jambes pour s'étendre en diagonale vers le haut vers une partie inférieure du cadre de moule, et un espace entre les rebords (15a, 15b) est entièrement scellé à l'exception des endroits où se trouvent les orifices d'aspiration (4).

3. Système comprenant un élément de moule de fondation en béton coulé (1), l'élément de moule comprenant un maillage de renforcement grossier fabriqué à partir de barres d'acier (11-14), dont les barres d'acier (11-14) sont fixées les unes aux autres en des points de croisement de celles-ci, lesdites barres d'acier comprenant des barres d'acier transversales (11, 13), le maillage de renforcement constituant une gouttière allongée comprenant un fond et des parois latérales et formant un cadre de moule, et un dispositif destiné à appliquer des feuilles plastiques sur les parois latérales dudit élément de moule de fondation en béton coulé (1),
**caractérisé en ce que** le dispositif comprend des tuyaux d'aspiration (3) pourvus d'orifices d'aspiration (4) et lorsque le cadre de moule est monté sur le dispositif pour appliquer les feuilles plastiques, les orifices d'aspiration (4) sont en alignement avec les barres d'acier transversales (13, 11) du cadre de moule et l'espacement entre les orifices d'aspiration est égal à l'espacement entre les barres d'acier transversales (13, 11) du cadre de moule, moyennant quoi, lorsque le dispositif fonctionne, l'effet d'aspiration est réparti localement dans un système de canaux d'aspiration par le maillage de renforcement (11-14).

4. Dispositif selon la revendication 3, **caractérisé en ce que** le tuyau d'aspiration (3) et les orifices d'aspiration (4) se trouvent sous un flanc côté inférieur des jambes (12) du cadre de moule lorsque le cadre de moule a été placé dans le dispositif pour l'application de feuilles plastiques (15).

5. Dispositif selon la revendication 3 ou 4, **caractérisé en ce que** le dispositif comprend une table de lamination (2), moyennant quoi l'élément de moule (1) est transporté à travers une unité de soufflage d'air chaud (5), et **en ce que** les tuyaux d'aspiration (3) sont montés sur la table de lamination (2) à l'aide de maillons (21) rotatifs autour d'un axe (19).
